# EUROPÄISCHE PATENTSCHRIFT

(11) **EP 2 135 830 B1**
(45) Veröffentlichungstag und Bekanntmachung des Hinweises auf die Patenterteilung: **27.06.2012**
(21) Anmeldenummer: 09006201.9
(22) Anmeldetag: 07.05.2009
(51) Int. Cl.: B65H 57/14, B29C 31/00, B29C 35/04, B29C 47/88

(54) **Vorrichtung zur kontinuierlichen Herstellung von Umhüllungen für langgestrecktes Gut**
Device for continuous production of shells for stretched goods
Dispositif de fabrication continue d'enveloppes pour bien allongé

(30) Priorität: 19.06.2008 DE 102008029167
(43) Veröffentlichungstag der Anmeldung: 23.12.2009
(73) Patentinhaber: MASCHINENBAU SCHOLZ GMBH & CO. KG, 48653 Coesfeld (DE)
(72) Erfinder: Werner, Gerhard, 48653 Coesfeld (DE); Funke,Frank, 48653 Coesfeld (DE)
(74) Vertreter: Hauck Patent- und Rechtsanwälte

(56) Entgegenhaltungen:
- EP-A1- 1 616 819
- DE-A1- 2 803 964
- GB-A- 652 824
- US-A- 2 629 768
- US-A- 3 244 292
- US-A- 5 152 506

## Beschreibung

Die vorliegende Erfindung betrifft eine Vorrichtung zur kontinuierlichen Herstellung von Umhüllungen für langgestrecktes Gut, beispielsweise elektrische Kabel und Leitungen, Rohre, Profile u.dgl., mit den Merkmalen des Oberbegriffs von Patentanspruch 1.

Derartige Vorrichtungen sind bekannt. Hierzu zählen beispielsweise sogenannte CV-Anlagen, in denen elektrische Kabel mit einer geeigneten Isolierung versehen werden. Eine solche Vorrichtung ist beispielsweise aus der DE 28 03 964 A1 bekannt. In dieser Veröffentlichung ist eine sogenannte vertikale CV-Anlage beschrieben, die insbesondere bei der Herstellung von beispielsweise elektrischen Hochspannungskabeln mit dickeren Isolierwandstärken eine unerwünschte Verformung nach dem Extrusionsvorgang durch das Eigengewicht des Materiales vermeidet. Diese bekannte Anlage besteht beispielsweise aus einer die Kabelseele umschließenden Kabelvorwärmung, einem Turmpodest zur Aufnahme eines Extruders mit einem Trichter, einem Umlenkrad sowie einem an den Extruderkopf anschließenden Teleskoprohr, das einen unmittelbaren Übergang ohne Druckverlust zu einer Gesamtrohrstrecke sicherstellt, die in einem Umlenkbehälter endet, von dem aus die isolierte Kabelseele durch eine Kühlzone mittels eines Raupenabzuges abgezogen und gegebenenfalls aufgewickelt oder zur weiteren Verarbeitung weitergeführt wird. Die Gesamtrohrstrecke besitzt einen ersten Heizabschnitt, in dem eine Vernetzung des Materiales der Kabelumhüllung stattfindet, und einen anschließenden Kühlabschnitt, von dem aus die Umhüllung in den Umlenkbehälter eingeführt wird.

Wie man Figur 1 der DE 28 03 964 A1 entnehmen kann, weist der Umlenkbehälter bei der bekannten Anlage ein Rad mit einem relativ großen Durchmesser auf, um das das mit der Umhüllung versehene Kabel geführt und aus der Vertikalen in die Horizontale umgelenkt wird. Ein solches, zur Umlenkung verwendetes Rad muss einen relativ großen Durchmesser besitzen, damit eine sanfte stetige Umlenkung erfolgen kann und ein für das Kabel schädliches abruptes Umlenken vermieden wird. Ein solches großes Rad benötigt einen groß ausgebildeten Umlenkbehälter zur Aufnahme desselben, so dass bei der bekannten Anlage zur Durchführung der Umlenkung ein beträchtlicher Herstellaufwand erforderlich ist.

Aus der US-A-2 629 768 ist ein bogenförmiger Rollenförderer für Kabel bekannt, mit dem fertige Kabel beispielsweise aus einer horizontal angeordneten Leitung in eine vertikal angeordnete Leitung umgelenkt werden. Der Rollenförderer weist zwei seitliche Führungen auf, die ein Herabgleiten des Kabels verhindern. Diese Veröffentlichung befasst sich daher mit der Umlenkung von fertigen Kabeln, beispielsweise im Tiefbau.

Aus der GB 652 824 A sind ein Verfahren zum Vulkanisieren einer Gummilage sowie eine Vorrichtung hierfür bekannt. Hierbei wird die zu vulkanisierende Gummilage über eine Vielzahl von Rollen geführt, die kreisförmig angeordnet sind. Es werden mehrere Gummilagen aufeinander angeordnet und mit Hilfe von Heizeinrichtungen zum Vulkanisieren erhitzt.

Der vorliegenden Erfindung liegt die Aufgabe zugrunde, eine Vorrichtung der eingangs geschilderten Art zu schaffen, bei der der Umlenkbehälter besonders kompakt ausgebildet ist.

Diese Aufgabe wird erfindungsgemäß bei einer Vorrichtung der angegebenen Art durch die kennzeichnen den Merkmale von Patentanspruch 1 gelöst.

Bei der erfindungsgemäßen Lösung findet daher kein einziges groß dimensioniertes Rad Verwendung, wie beim Stand der Technik, sondern als Umlenkeinrichtung wird eine Vielzahl von Rollen verwendet, die eine dem gewünschten Umlenkwinkel entsprechende Kurvenbahn für die umzulenkende Umhüllung bilden. Diese Rollen treten dabei indirekt mit der umzulenkenden Umhüllung über ein Endlosband, das über die Rollen geführt ist, in Kontakt. Die Rollen sind hierbei vorzugsweise nicht selbst angetrieben, sondern werden über den indirekten Reibkontakt mit der umzulenkenden Umhüllung in Drehungen versetzt. Zwischen der Umhüllung und den Rollen findet daher keine Relativbewegung statt, so dass sichergestellt wird, dass die Umlenkeinrichtung schonend auf die umzulenkende Umhüllung einwirkt und die Umhüllung hierdurch nicht beschädigt wird.

Durch die Verwendung von Rollen anstatt eines einzelnen groß dimensionierten Rades kann die Umlenkeinrichtung und damit der die Umlenkeinrichtung aufnehmende Umlenkbehälter kompakter ausgebildet werden als beim vorstehend erwähnten Stand der Technik, so dass sich die Herstellkosten der Vorrichtung beträchtlich verringern lassen. Diese, mit der vorliegenden Erfindung erzielte kompakte Bauweise beruht bereits darauf, dass für die Umlenkung kein volles Rad mehr benötigt wird, sondern nur der Raumbedarf für ein Teil eines derartigen Rades, beispielsweise bei einer Umlenkung um 90° der Raumbedarf eines 1/4-Rades, bei einer Umlenkung um 180° der Raumbedarf eines 1/2-Rades etc., wenn man gleiche Krümmungsradien voraussetzt.

Selbst wenn daher mit der erfindungsgemäßen Lösung gleiche Krümmungsradien realisiert werden, wie sie beim Stand der Technik (groß dimensioniertes Rad) Verwendung finden, entsteht daher eine beträchtliche Raumersparnis, die besonders eklatant ist bei feineren Umlenkwinkeln, wie beispielsweise 90°, da hierbei etwa 3/4 des bei einem Rad benötigten Raumbedarfes entfallen können. Bei einer Umlenkung um 180° lässt sich noch etwa die Hälfte des bei einem Rad benötigten Raumbedarfes einsparen.

Dies schließt nicht aus, dass mit der erfindungsgemäßen Lösung auch noch engere Krümmungsradien als beim Stand der Technik verwirklicht werden können, wodurch der erforderliche Raumbedarf noch weiter abgesenkt werden kann.

Wie bereits erwähnt, steht die Umhüllung mit einem Endlosband in Kontakt, das über die Umlenkrollen geführt ist. Das Band erstreckt sich dabei entlang der dem Umlenkwinkel der Umhüllung entsprechenden Kurvenbahn und wird durch die Abziehbewegung der Umhüllung mitbewegt. Es versteht sich, dass hierbei ein Endlosband Verwendung findet, das durch die Abziehbewegung der Umhüllung eine Umlaufbewegung durchführt.

Die erfindungsgemäße Lösung kommt vorzugsweise bei Vorrichtungen mit senkrecht angeordneter Rohrstrecke zur Anwendung. Dies schließt nicht aus, dass sie auch bei geneigt angeordneten Rohrstrecken eingesetzt wird. Die Umlenkeinrichtung lenkt die Umhüllung vorzugsweise in die Horizontale oder Vertikale. Bei den häufigsten Anwendungsfällen tritt die Umhüllung aus einer vertikalen Rohrstrecke in den Umlenkbehälter ein und wird in diesem in die Horizontale oder wieder in die Vertikale umgelenkt, so dass die Umhüllung den Umlenkbehälter vorzugsweise in einer weiteren horizontalen oder vertikalen Rohrstrecke, die beispielsweise zur Endkühlung verwendet wird, verlässt.

Bei dem erfindungsgemäß verwendeten Fördermittel handelt es sich um ein Band. Hierbei weist die Umlenkeinrichtung insbesondere eine Spanneinrichtung für das Endlosband auf, beispielsweise eine geeignete Spannrolle, um die für eine korrekte Umlenkung benötigte konstante Fördermittelspannung aufrechtzuerhalten.

Die Oberfläche der Rollen ist vorzugsweise an die Form der Umhüllung angepasst. Die Rollen weisen daher zweckmäßigerweise im Axialschnitt eine konkave Ober- und Unterseite auf, die der Krümmung der Umhüllung entspricht. Da es sich bei der Umhüllung normalerweise um eine solche mit kreisförmigem Querschnitt handelt, weisen die Umlenkrollen ebenfalls an der Ober- und Unterseite vorzugsweise eine kreisbogenförmige Kontur auf. Das als Zwischenmedium Verwendung findende Band ist zweckmäßigerweise so flexibel ausgebildet, dass es sich an die Kontur der Rollen und damit an die Kontur der umzulenkenden Umhüllung anpasst.

Aufgrund der Anpassung der Rollenkontur an die Kontur der Umhüllung wird ferner sichergestellt, dass die Rollen entsprechende Führungsaufgaben für die Umhüllung übernehmen, so dass ein seitliches Abrutschen der Umhüllung von den Umlenkrollen ausgeschlossen ist.

Der Umlenkbehälter ist vorzugsweise als liegender Behälter mit einer Längsachse ausgebildet. Hierbei sind die Rollen der Umlenkeinrichtung zweckmäßigerweise quer zur Längsachse des Umlenkbehälters angeordnet. Die umzulenkende Umhüllung tritt daher vorzugsweise senkrecht von oben in den Umlenkbehälter ein und verlässt diesen bei einer Umlenkung um 90° durch die gegenüberliegende Behälterendwand oder bei einer Umlenkung um 180° wieder durch die Oberseite des Behälters.

Die Rollen sind vorzugsweise im Umlenkbehälter an seitlichen Trägern drehbar gelagert, welche über seitliche und/oder vertikale Stützen an der Behälterwand und/oder am Behälterboden befestigt sind. Eine beidseitige Lagerung der Rollen wird gegenüber einer einseitigen Lagerung derselben bevorzugt, um mögliche Durchhängeffekte zu vermeiden. Die seitlichen Träger können dabei vorzugsweise plattenförmig ausgebildet sein und, falls erforderlich, entsprechende Verstärkungselemente bzw. -abschnitte besitzen.

Bei einer besonders bevorzugten Ausführungsform der Erfindung, bei der im Umlenkbehälter eine Umlenkung um 90° stattfindet, besitzt die Umlenkeinrichtung sieben hintereinander entlang der einen Winkel von 90° abdeckenden Kurvenbahn angeordnete Rollen, um die ein Förderband geführt ist, das mit einer auf der Rückseite der sieben Rollen angeordneten Spannrolle auf Spannung gehalten wird.

Geeignete Materialien zur Ausgestaltung des Umlenkbehälters und der Umlenkeinrichtung sind dem Fachmann bekannt und müssen daher an dieser Stelle nicht mehr im Einzelnen aufgeführt werden.

Die Erfindung wird nachfolgend anhand von Ausführungsbeispielen in Verbindung mit der Zeichnung im Einzelnen erläutert. Es zeigen:
- Figur 1: eine schematische Darstellung einer Vorrich- tung zur kontinuierlichen Herstellung von Umhüllungen für langgestrecktes Gut;
- Figur 2: einen Längsschnitt durch einen Umlenkbehäl- ter der Vorrichtung der Figur 1;
- Figur 3: eine Seitenansicht des Umlenkbehälters der Figur 2;
- Figur 4: einen Längsschnitt durch eine weitere nicht erfindungsgemäße Aus- führungsform eines Umlenkbehälters; und
- Figur 5: einen Querschnitt des in Figur 4 dargestell- ten Umlenkbehälters.

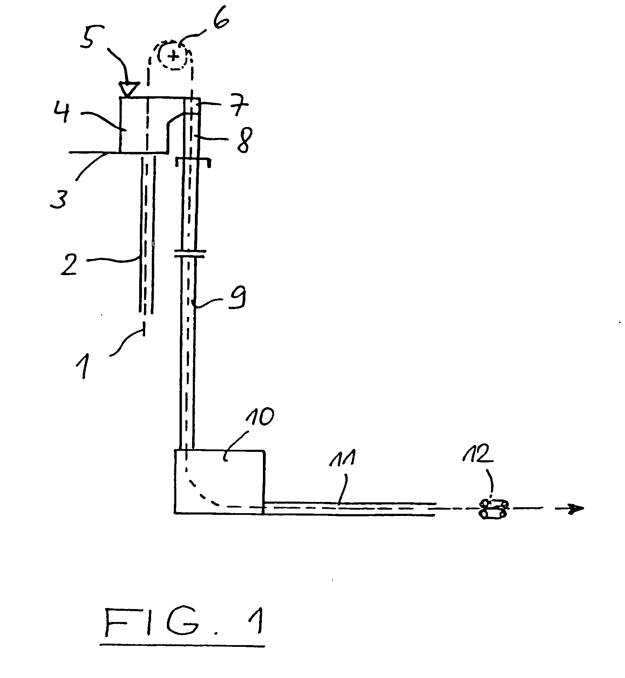

Bei der in Figur 1 dargestellten Vorrichtung handelt es sich um eine vertikale CV-Anlage, die zur kontinuierlichen Herstellung von elektrischen Hochspannungskabeln dient, d.h. die entsprechenden Kabelseelen mit einer zu Isolierzwecken dienenden Umhüllung versieht. Die Anlage weist eine die Kabelseele 1 umschließende Kabelvorwärmung 2, ein Turmpodest 3 zur Aufnahme eines Extruders 4 mit einem Trichter 5, ein Umlenkrad 6 sowie ein sich an den Extruderkopf 7 anschließendes Teleskoprohr 8 auf. Das Teleskoprohr dient dazu, einen unmittelbaren Übergang ohne Druckverlust zu einer Rohrstrecke 9 sicherzustellen, die einen ersten Heizabschnitt zur Vernetzung der Kabelisolierung und einen nachfolgenden Kühlabschnitt aufweist. Vom Kühlabschnitt tritt das mit der Umhüllung (Isolierung) versehene Kabel in einen unter Druck stehenden Umlenkbehälter 10 ein, in dem es aus der Vertikalen in die Horizontale in eine weitere, als Kühlzone dienende Rohrstrecke 11 umgelenkt wird. Das isolierte Kabel wird über eine entsprechende Abzugseinrichtung 12 durch die Rohrstrecke 9, den Umlenkbehälter 10 und die nachfolgende Rohrstrecke 11 gezogen.

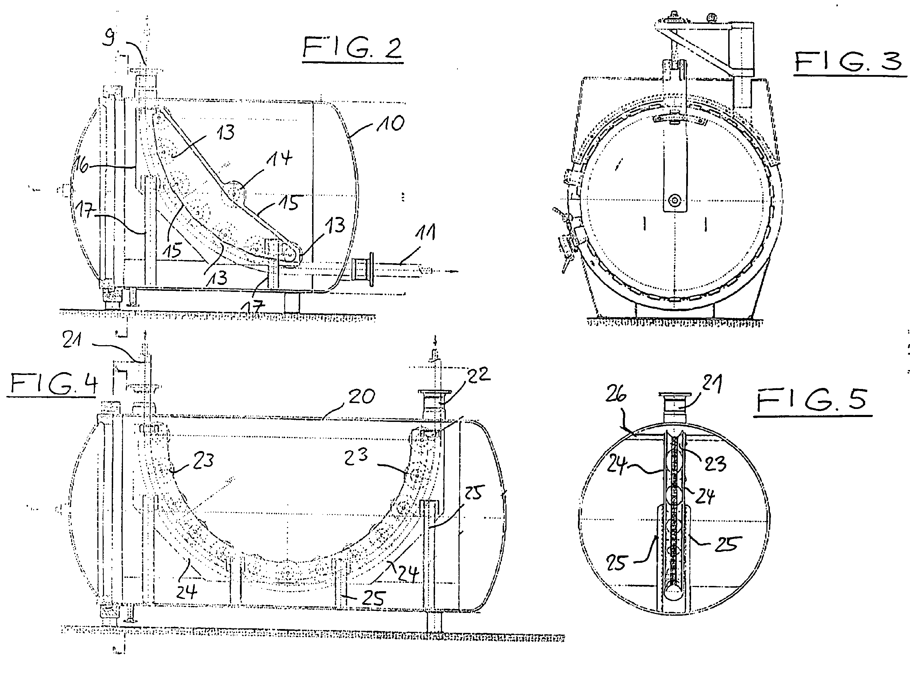

Die Figuren 2 und 3 zeigen den Umlenkbehälter 10 der Figur 1 im Längsschnitt und in der Vorderansicht. Der Umlenkbehälter 10 ist als liegender Behälter ausgebildet und weist eine Längsachse auf. Er hat an seiner Oberseite einen Anschlussstutzen für die Rohrstrecke 9, über den die mit der Isolierung versehene Kabelseele in den Umlenkbehälter 10 eingeführt wird. Als Umlenkeinrichtung befinden sich im Umlenkbehälter 10 sieben Rollen 13, die drehbar an einem plattenförmigen Träger 16 gelagert sind, welcher über Stützen 17 am Boden des Behälters befestigt ist. Um die sieben Rollen 13, die entlang einer Kurvenbahn angeordnet sind, welche dem Bogen eines Umlenkwinkels von 90° entspricht, ist ein Fördermittel 15 in der Form eines Förderbandes geführt, das ein Endlosband bildet und auf der Rückseite der Rollen 13 von einer Spannrolle 14 gespannt wird. Die Rollen 13 besitzen im Axialschnitt eine konkave Ober- und Unterseite, wobei die Oberfläche der Rollen 13 an die Form des isolierten Kabels angepasst ist, das im Querschnitt kreisförmig ausgebildet ist. Das um die Rollen 13 geführte Band 15 ist flexibel und legt sich an die Kontur der Rollen 13, so dass eine Anpassung an die Form der Isolierung des Kabels erzielt wird.

Die in Figur 1 dargestellte Abzugseinrichtung 12 zieht das mit der Isolierung versehene Kabel durch die Rohrstrecke 9 und den Umlenkbehälter 10, wodurch die Rollen 13 in Drehungen versetzt werden und das bandförmige Fördermittel 15 eine Umlaufbewegung ausführt. Es findet hierbei keine Relativbewegung zwischen Förderband und der Kabelisolierung statt, so dass die Isolierung nicht beschädigt wird. Das isolierte Kabel gelangt schließlich über einen Rohrstutzen an der Vorder- bzw. Rückseite des Umlenkbehälters 10 aus diesem heraus in eine weitere zu Kühlzwecken dienende Rohrstrecke 11.

Bei der in Figur 4 gezeigten nicht erfindungsgemäßen Ausführungsform eines Umlenkbehälters 20 erfolgt die Umlenkung eines isolierten Kabels um 180°, d.h. das isolierte Kabel dringt bei 21 in den Umlenkbehälter ein und verlässt diesen wieder bei 22. Im Umlenkbehälter 20, der ebenfalls als liegender Behälter mit einer Längsachse ausgebildet ist, befinden sich dreizehn Rollen 23, die ebenfalls wie bei der Ausführungsform der Figur 2 an einem plattenförmigen Träger 24 an beiden Seiten der Rollen 23 drehbar gelagert sind. Die plattenförmigen Träger 24 sind über Stützen 26 und 25 am Boden und der Seitenwand des Umlenkbehälters 20 befestigt.

Bei dieser Ausführungsform tritt die Isolierung des Kabels unmittelbar mit den Rollen 23 in Kontakt und wird von diesen geführt und umgelenkt. Die Rollen 23 weisen ebenfalls im Axialschnitt eine konkave Ober- und Unterseite auf, die an die Form der Isolierung des Kabels angepasst ist. Ein seitliches Abrutschen des Kabels ist daher nicht möglich.

Figur 5 zeigt einen Querschnitt durch den Umlenkbehälter 20 der Figur 4.

Abschließend sei noch erwähnt, dass erfindungsgemäß ein beliebiger Umlenkwinkel Verwendung finden kann. Die angegebenen Winkel von 90° und 180° stellen daher nur Beispiele dar.

Ferner hat die erfindungsgemäß erreichte kompakte Bauweise des Umlenkbehälters den weiteren Vorteil, dass weniger Medium zur Füllung des Behälters, beispielsweise zu Kühlzwecken des Kabels, benötigt wird (Wasser, Stickstoff etc.).

## Patentansprüche

1. Vorrichtung zur kontinuierlichen Herstellung von Umhüllungen für langgestrecktes Gut, beispielsweise elektrische Kabel und Leitungen, Rohre, Profile u. dgl., mit einer unter Druck stehenden senkrecht oder geneigt angeordneten Rohrstrecke (9) mit einem Heizabschnitt, im dem eine Vernetzung des Materiales der Umhüllung stattfindet, und einem anschließenden Kühlabschnitt sowie einem auf die Rohrstrecke (9) folgenden unter Druck stehenden Umlenkbehälter (10), in dem die Umhüllung aus ihrer durch die Rohrstrecke (9) vorgegebenen Richtung umgelenkt wird, wobei im Umlenkbehälter (10) eine Umlenkeinrichtung vorgesehen ist, und einer Abzugseinrichtung (12) zum Ziehen des umhüllten Gutes durch die Rohrstrecke (9) und den Umlenkbehälter (10), **dadurch gekennzeichnet, dass** die Umlenkeinrichtung eine Vielzahl von Rollen (13, 23) umfasst, die auf einer dem Umlenkwinkel der Umhüllung entsprechenden Kurvenbahn angeordnet sind und über ein um die Rollen herum geführtes Endlosband (15) indirekt mit der Umhüllung in Kontakt stehen.

2. Vorrichtung nach Anspruch 1, **dadurch gekennzeichnet, dass** die Umlenkeinrichtung die Umhüllung in die Horizontale oder Vertikale umlenkt.

3. Vorrichtung nach einem der vorangehenden Ansprüche, **dadurch gekennzeichnet, dass** die Umlenkeinrichtung eine Spanneinrichtung für das Endlosband (15) aufweist.

4. Vorrichtung nach einem der vorangehenden Ansprüche, **dadurch gekennzeichnet, dass** die Oberfläche der Rollen (13, 23) an die Form der Umhüllung angepasst ist.

5. Vorrichtung nach Anspruch 4, **dadurch gekennzeichnet, dass** die Rollen (13, 23) im Querschnitt eine konkave Ober- und Unterseite aufweisen.

6. Vorrichtung nach einem der vorangehenden Ansprüche, **dadurch gekennzeichnet, dass** die Umlenkeinrichtung über einen einem Winkel von 90° entsprechenden Bogen angeordnet ist.

7. Vorrichtung nach einem der Ansprüche 1 bis 5, **dadurch gekennzeichnet, dass** die Umlenkeinrichtung über einen einem Winkel von 180° entsprechenden Bogen angeordnet ist.

8. Vorrichtung nach einem der vorangehenden Ansprüche, **dadurch gekennzeichnet, dass** die Rollen (13, 23) der Umlenkeinrichtung quer zur Längsachse des Umlenkbehälters angeordnet sind.

9. Vorrichtung nach einem der vorangehenden Ansprüche, **dadurch gekennzeichnet, dass** die Rollen (13, 23) an seitlichen Trägern (24) drehbar gelagert sind, welche über seitliche und/oder vertikale Stützen (25, 26) an der Behälterwand und/oder am Behälterboden befestigt sind.

10. Vorrichtung nach Anspruch 9, **dadurch gekennzeichnet, dass** die seitlichen Träger (24) plattenförmig ausgebildet sind.

## Claims

1. A device for the continuous production of shells for elongated goods, for instance electric cables and lines, pipes, profiles, etc., comprising a pressurized vertical or inclined pipe section (9) with a heating portion in which a cross-linking of the material of the shell takes place, and a subsequent cooling portion as well as a pressurized deflection container (10) following the pipe section (9) in which the shell is deflected from its direction predetermined by the pipe section (9), wherein a deflection device is provided in the deflection container (10), and drawing means (12) for drawing the good provided with the shell through the pipe section (9) and the deflection container (10), **characterized in that** the deflection device includes a plurality of rollers (13, 23) which are arranged on a curved path corresponding to the deflection angle of the shell and which are indirectly in contact with the shell by means of an endless belt (15) extending around the rollers.

2. The device according to claim 1, **characterized in that** the deflection device deflects the shell into the horizontal or vertical direction.

3. The device according to one of the preceding claims, **characterized in that** the deflection device includes a tension device for the endless belt (15).

4. The device according to one of the preceding claims, **characterized in that** the surface of the rollers (13, 23) is adapted to the shape of the shell.

5. The device according to claim 4, **characterized in that** the rollers (13, 23) have a concave upper side and lower side in cross section.

6. The device according to one of the preceding claims, **characterized in that** the deflection device is arranged along an arc corresponding to an angle of 90°.

7. The device according to one of claims 1 - 5, **characterized in that** the deflection device is arranged along an arc corresponding to an angle of 180°.

8. The device according to one of the preceding claims, **characterized in that** the rollers (13, 23) of the deflection device are arranged transversely with respect to the longitudinal axis of the deflection container.

9. The device according to one of the preceding claims, **characterized in that** the rollers (13, 23) are rotatably supported at lateral beams (24) which are fixed at the container wall and/or at the container bottom by means of lateral and/or vertical posts (25, 26).

10. The device according to claim 9, **characterized in that** the lateral beams (24) are formed in a plate-like manner.

## Revendications

1. Dispositif de fabrication continue d'enveloppes pour bien allongé, par exemple des câbles et conduites électriques, des tubes, des profils et similaires, avec un tronçon tubulaire (9) vertical ou incliné sous pression avec une section de chauffage, dans laquelle se déroule une réticulation du matériau de l'enveloppe, et une section de refroidissement y faisant suite ainsi qu'un récipient de déviation (10) sous pression placé en aval sur le tronçon tubulaire (9), dans lequel l'enveloppe est déviée de sa direction prédéfinie par le tronçon tubulaire (9), un dispositif de déviation étant prévu dans le récipient de déviation (10), et un dispositif de tirage (12) permettant de tirer le bien enveloppé à travers le tronçon tubulaire (9) et le récipient de déviation (10), **caractérisé en ce que** le dispositif de déviation comporte une pluralité de rouleaux (13, 23) qui sont agencés sur un chemin incurvé correspondant à l'angle de déviation de l'enveloppe et qui sont en contact indirect avec l'enveloppe par le biais d'une bande magnétique (15) guidée autour des rouleaux.

2. Dispositif selon la revendication 1, **caractérisé en ce que** le dispositif de déviation fait dévier l'enveloppe horizontalement ou verticalement.

3. Dispositif selon l'une quelconque des revendications précédentes, **caractérisé en ce que** le dispositif de déviation présente un dispositif de serrage pour la bande magnétique (15).

4. Dispositif selon l'une quelconque des revendications précédentes, **caractérisé en ce que** la surface des rouleaux (13, 23) est adaptée à la forme de l'enveloppe.

5. Dispositif selon la revendication 4, **caractérisé en ce que** la section transversale des rouleaux (13, 23) présente un côté supérieur et inférieur concave.

6. Dispositif selon l'une quelconque des revendications précédentes, **caractérisé en ce que** le dispositif de déviation est disposé sur un arc correspondant à un angle de 90°.

7. Dispositif selon l'une quelconque des revendications 1 à 5, **caractérisé en ce que** le dispositif de déviation est disposé sur un arc correspondant à un angle de 180°.

8. Dispositif selon l'une quelconque des revendications précédentes, **caractérisé en ce que** les rouleaux (13, 23) du dispositif de déviation sont disposés transversalement à l'axe longitudinal du dispositif de déviation.

9. Dispositif selon l'une quelconque des revendications précédentes, **caractérisé en ce que** les rouleaux (13, 23) sont logés de manière rotative au niveau de supports latéraux (24) qui sont fixés sur la paroi du récipient et/ou au fond du récipient par le biais d'appuis latéraux et/ou verticaux (25, 26).

10. Dispositif selon la revendication 9, **caractérisé en ce que** les supports latéraux (24) sont réalisés en forme de plaques.
